# EUROPÄISCHE PATENTANMELDUNG

(11) **EP 1 743 514 A1**
(43) Veröffentlichungstag der Anmeldung: **17.01.2007**
(21) Anmeldenummer: 06020235.5
(22) Anmeldetag: 29.08.2002
(51) Int. Cl.: A01D 34/03

(54) **Mehrteiliges Mähwerk mit wenigstens einem Frontmähwerk und einem linken und rechten Seitenmähwerk**

(30) Priorität: 23.10.2001 DE 10151571
(62) Teilanmeldung aus: 02019329.8
(71) Anmelder: CLAAS Saulgau GmbH, 88348 Bad Saulgau (DE)
(72) Erfinder: Geng, Manfred, 88348 Bad Saulgau (DE); Gausmann, Ludger, 49170 Hagen (DE); Gruber, Georg, 88348 Bad Saulgau (DE); Loebe, Stefan, 48231 Warendorf (DE); Renger, Herman, 33129 Delbrück (DE)
(74) Vertreter: Roth, Klaus

(57) **Zusammenfassung**

Die Erfindung betrifft ein mehrteiliges Mähwerk, das wenigstens ein Frontmähwerk sowie wenigstens ein linkes und wenigstens ein rechtes Seitenmahwerk aufweist, die im Betrieb auf beiden Seiten des wenigstens einen Frontmähwerks angeordnet sind, wobei das wenigstens eine Frontmähwerk, das wenigstens eine linke sowie das wenigstens eine rechte Seitenmähwerk bezüglich einem Trägerfahrzeug verschoben werden können, vorgeschlagen, das dadurch gekennzeichnet ist, dass das Frontmähwerk im Betrieb und in Fahrtrichtung des Trägerfahrzeugs gesehen vor dem Trägerfahrzeug angeordnet ist, wobei das wenigstens eine Frontmähwerk für das Vorgewende anhebbar beziehungsweise absenkbar ist.

## Beschreibung

Die Erfindung betrifft ein mehrteiliges Mähwerk mit wenigstens einem Frontmähwerk und einem linken und rechten Seitenmähwerk gemäß dem Oberbegriff des Anspruches 1.

In dem deutschen Gebrauchsmuster DE 297 19 765 U wird ein Fahrzeug mit drei Mäheinheiten offenbart. Eine Mäheinheit ist frontseitig an einen Schlepper gekoppelt, die beiden anderen sind an den Seiten des Schleppers angeordnet. Zur Erzeugung eines Großschwadens wird das Erntegut des frontseitigen Mähwerkes zwischen den Rädern hindurch gefördert. Die beiden seitlichen Mähwerke fördern das Erntegut jeweils in Richtung auf das Fahrzeug zu, so dass ein Großschwaden entsteht, dessen Höhe durch den Freiraum zwischen den Rädern und den Abstand zwischen dem höchsten Punkt der Bodenoberfläche und dem tiefsten Punkt der Oberfläche der Fahrzeugunterseite begrenzt ist. Diese Anordnung hat den Nachteil, dass es insbesondere bei hohem Futteraufkommen (z. B. beim ersten Schnitt des Jahres) zu einem Gutstau unterhalb des Schleppers kommt, was nicht nur einen unregelmäßig geformten Schwaden zur Folge hat, der an der nachfolgenden schwadaufnehmenden Maschine bei der Weiterverarbeitung erhebliche Probleme verursacht, sondern auch zu einer erheblichen Verschmutzung des Schleppers führt.

Ein weiteres System zur Erzeugung eines Großschwadens durch einen selbstfahrenden Schwader wird in der CA 1183355 offenbart. Der beschriebene dreiteilige Schwader legt das Erntegut des Frontmähwerkes direkt neben der Außenseite eines Rades ab. Die schwadnahe seitliche Mäheinheit fördert das Gut anderen Schwaden. Durch eine solche Konstruktion wird eine unnötige Verschmutzung der Unterseite der Maschine verursacht, die zu erhöhten Ausfall- und Stillstandszeiten führen kann. Zudem entstehen bei der Schwadablage neben den Rädern Schwierigkeiten bei Kurvenfahrten und im Vorgewende, da die Räder des Schleppers über den abgelegten Schwaden fahren müssen. Das führt zwangsläufig zu einer stark erhöhten Futterverschmutzung. Um diesen Nachteil zu vermeiden, werden mitunter Hinterräder mit geringerer Breite und kleinerem Durchmesser für den Schlepper gewählt, was allerdings zu erheblichen Strukturschäden der bearbeiteten Böden führt.

Der Erfindung liegt daher die Aufgabe zugrunde, ein mehrteiliges Mähwerk zu entwickeln, das unter größtmöglicher Schonung sowohl der schwadablegenden Maschine als auch der nachfolgenden schwadaufnehmenden Maschine und des Bodens kostengünstig und zuverlässig möglichst saubere Großschwaden erzeugt.

Erfindungsgemäß wird die Aufgabe durch ein eingangs erwähntes mehrteiliges Mähwerk mit den kennzeichnenden Merkmalen des Anspruches 1 gelöst.

Dadurch, dass das Frontmähwerk bzw. eine Frontmähwerksgruppe im Betrieb und in Fahrtrichtung des Trägerfahrzeugs gesehen vor dem Trägerfahrzeug angeordnet ist, wobei das wenigstens eine Frontmähwerk bzw. die Frontmähwerksgruppe für das Vorgewende anhebbar beziehungsweise absenkbar ist, gelingt es, zuverlässig möglichst saubere Großschwaden zu erzeugen. Dadurch werden insbesondere die eingangsbeschriebenen Nachteile der Futterverschmutzung und des ungleichmäßig geformten Schwadens vermieden.

In besonders vorteilhafter Weise können die Fördereinrichtungen des wenigstens einen Frontmähwerks bei der Bearbeitung eines ersten Bearbeitungsstreifens das Erntegut außerhalb der zu erwartenden Fahrspur ablegen, wobei der Schwaden des Frontmähwerks mit dem Schwaden des wenigstens einen rechten bzw. linken Seitenmähwerks zusammengelegt wird und bei der Bearbeitung des angrenzenden zweiten Bearbeitungsstreifens der Schwaden des Frontmähwerkes außerhalb der zu erwartenden Fahrspur abgelegt wird, wobei der Schwaden des Frontmähwerks mit dem Schwaden des wenigstens einen linken bzw. rechten Mähwerks zusammengelegt wird, während der Schwaden des mindestens einen rechten bzw. linken Mähwerks mit dem Schwaden des ersten Bearbeitungsstreifens zusammengelegt wird. Dadurch ist es möglich, die benachbarten Streifen auch in entgegen-gesetzter Fahrtrichtung zu bearbeiten.

In einer besonders vorteilhaften Ausführungsform ist die Austragsrichtung der Fördereinrichtungen der Mähwerke umkehrbar, so dass auch eine Bearbeitung von benachbarten Streifen in entgegengesetzter Fahrtrichtung bei gleichbleibendem Volumen des Großschwadens möglich ist. Auf eine derartige Änderung der Austragsrichtungen der Fördereinrichtung kann durch die konsequente Beibehaltung der Bearbeitungsrichtung auf den benachbarten Bearbeitungsstreifen jedoch auch verzichtet werden.

In einer besonders vorteilhaften Ausführungsform kann das wenigstens eine rechte Seitenmähwerk während der Arbeit des mindestens einen linken Seitenmähwerks und des wenigstens einen Frontmähwerks und/oder das wenigstens eine linke Seitenmähwerk während der Arbeit des mindestens einen rechten Seitenmähwerks und des wenigstens einen Frontmähwerks ausgehoben werden. Durch das Ausheben insbesondere der randstreifenseitigen Seitenmähwerke kann bei sehr guten Sichtverhältnissen für den Fahrer mit dem wenigstens einen Frontmähwerk und dem wenigstens einen zur Feldmitte orientierten Seitenmähwerk gemäht werden, wobei die zugehörigen Schwaden zusammengelegt werden, ohne dass ein kleiner Schwaden am Randstreifen zurückbleibt.

In einer besonders vorteilhaften Weiterbildung der Erfindung verfügt der Mähmesserantrieb des wenigstens einen rechten bzw. linken Seitenmähwerks über eine Einrichtung, die beim Ausheben des rechten bzw. linken Seitenmähwerks den Mähmesserantrieb selbsttätig abschaltet. Durch eine derartige Einrichtung können die Gefährdungen durch sich lösende Mähmesser für die direkte Umgebung minimiert werden.

In einer weiteren erfindungsgemäßen Ausführungsform existiert eine vorwählbare Routinesteuerung für das Vorgewende, die zumindest eine Teilautomatisierung der komplexen Tätigkeiten zur Umstellung der Maschine auf einen Streifen, der in entgegen-gesetzter Fahrtrichtung bearbeitet werden soll, und somit eine Richtungsumkehr aller Querfördereinrichtungen erfordert, bewirkt. In einer vorteilhaften Ausführungsform beinhaltet die vorwählbare Routinesteuerung für das Vorgewende, dass erst das wenigstens eine Frontmähwerk und dann die linken und rechten Seitenmähwerke angehoben werden, und danach oder währenddessen die Arbeitsrichtung der Fördereinrichtung des Frontmähwerks bzw. der Fördereinrichtungen der Frontmähwerksgruppen umgekehrt wird. Weiterhin ist es von Vorteil, wenn die vorwählbare Routinesteuerung für das Vorgewende auch beinhaltet, dass nach oder während der Umkehrung der Arbeitsrichtung der Fördereinrichtung des Frontmähwerks bzw. der Fördereinrichtungen der Frontmähwerksgruppen das zuvor angehobene Frontmähwerk bzw. die Frontmähwerksgruppen und danach die zuvor angehobenen rechten und linken Seitenmähwerke abgesenkt werden.

Das erfindungsgemäße Verfahren wird nachfolgend anhand von in Zeichnungen dargestellten Ausführungsbeispielen näher erläutert.

Es zeigen
- Figur 1: die erfindungsgemäße Bildung von Großschwaden durch ein mehrteiliges Mähwerk bei zwei Streifen mit gleichgerichteter Bearbeitungsrichtung
- Figur 2: die erfindungsgemäße Bildung von Großschwaden durch ein mehrteiliges Mähwerk bei zwei Streifen mit entgegengesetzter Bearbeitungsrichtung
- Figur 3: die erfindungsgemäße Bildung von Großschwaden durch ein mehrteiliges Mähwerk bei zwei Streifen mit gleichgerichteter Bearbeitungsrichtung, wobei es sich bei einem Streifen um einen Randstreifen handelt

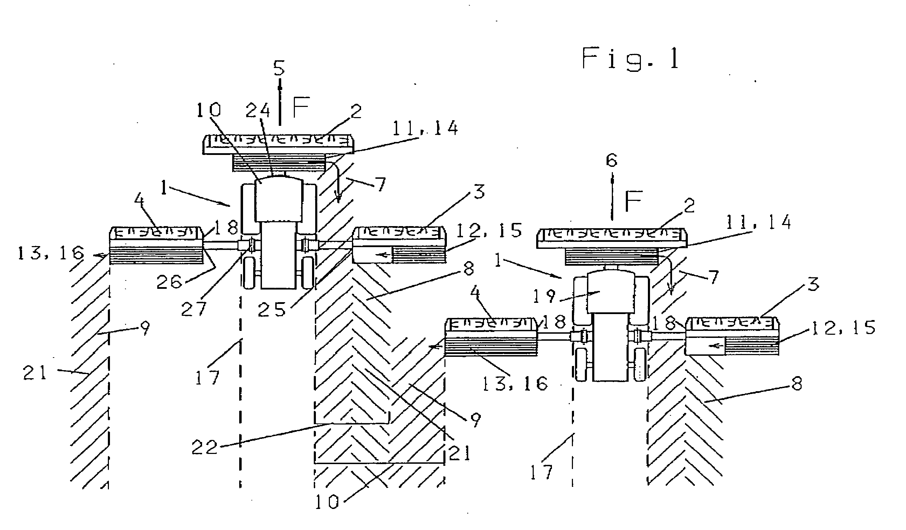

In Figur 1 ist ein mehrteiliges Mähwerk (1) dargestellt, das aus einem Frontmähwerk und einem rechten und einem linken Seitenmähwerk (3, 4) besteht. Dieses Mähwerk (1) mäht nacheinander wenigstens zwei benachbarte Bearbeitungsstreifen (5, 6) in paralleler Arbeitsrichtung. Die Schwaden (7) des Frontmähwerks (2) werden in diesem Ausführungsbeispiel mit den Schwaden (8) des rechten Seitenmähwerks (3) rechts neben der zu erwartenden Fahrspur (17) abgelegt, während der Schwaden (9) des linken Seitenmähwerks (4) von dem mehrteiligen Mähwerk (1) weg nach außen gefördert wird, so dass dieser Schwaden (9) des zweiten Bearbeitungsstreifens (6) jeweils zu den zusammengelegten Schwaden (7 und 8) des Frontmähwerks (2) und des rechten Seitenmähwerks (3) des ersten Bearbeitungsstreifens (5) zu einem Großschwaden (10) zusammengelegt werden. Die Fördereinrichtungen des Frontmähwerks und der Seitenmähwerke (11, 12, 13) sind in diesem Beispiel als Querförderbänder (14, 15, 16) ausgebildet.

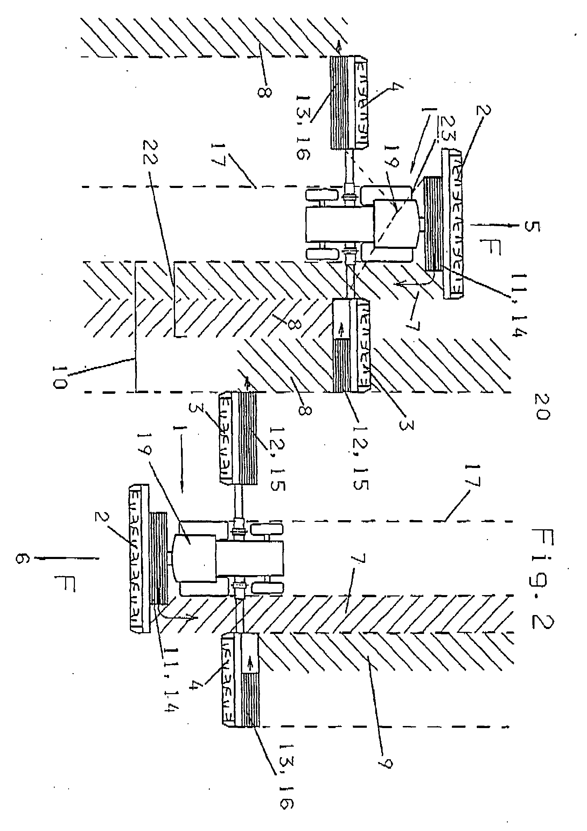

In Figur 2 ist ein mehrteiliges Mähwerk (1) abgebildet, das nacheinander wenigsten zwei benachbarte Bearbeitungsstreifen (5, 6) in entgegengesetzter Arbeitsrichtung mäht. Unter diesen Bedingungen müssen zur Bildung von Großschwaden (10) beim Bearbeiten des zweiten Streifens (6) die Förderrichtungen aller Fördereinrichtungen (11, 12, 13) für das Erntegut (21) entgegengesetzt zu den Förderrichtungen bei der Bearbeitung des ersten Streifens (5) gewählt werden. Die Richtungsumkehr aller Fördereinrichtungen (11, 12, 13) wird vorzugsweise durch eine Routinesteuerung (19) bewirkt, bei der beispielsweise auf ein elektromagnetisches Signal (23) hin die Antriebe (24, 25, 26) für die Querförderbänder (14, 15, 16) ihre Drehrichtung ändern. Für das Vorgewende (20) besteht zusätzlich zu der Richtungsumkehr der Querförderbänder (14, 15, 16) die Notwendigkeit, die Mähwerke (2, 3, 4) auszuheben, um eine unkontrollierte Mähgutaufnahme und Breitverteilung während des Wendevorganges zu vermeiden. Auf ein vorzugsweise elektromagnetisches Signal (23) hin werden in der Vorgewendesteuerung zunächst das Frontmähwerk (2) und dann die Seitenmähwerke (3, 4) angehoben, danach wird die Drehrichtung der Querförderbänder (14, 15, 16) umgekehrt, dann werden das Frontmähwerk (2) und kurz darauf die Seitenmähwerke (3, 4) wieder abgesenkt.

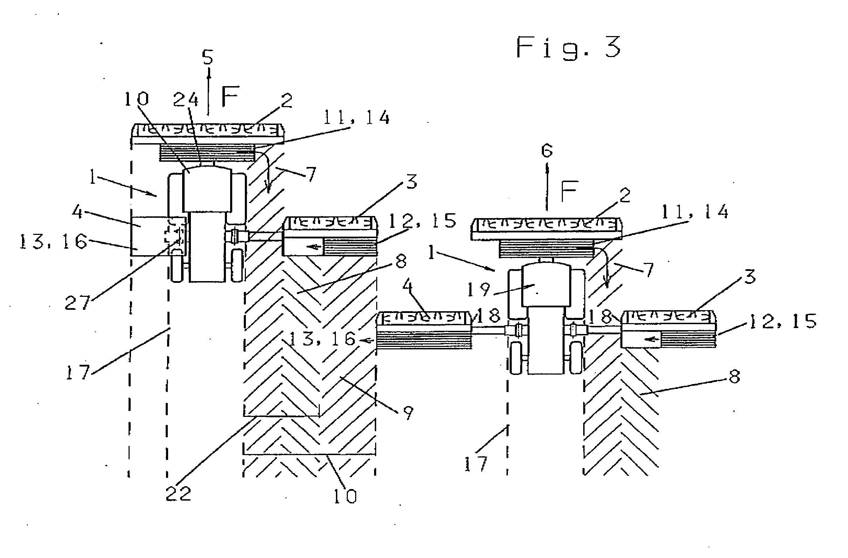

In Figur 3 ist ein mehrteiliges Mähwerk (1) dargestellt, das nacheinander zwei Streifen (5, 6) mit gleichgerichteter Arbeitsrichtung bearbeitet. Bei dem ersten Streifen (5) handelt es sich um einen Randstreifen. Das linke Seitenmähwerk (4) wird zur Bearbeitung des Randstreifens (5) um die Achse (27) in eine Nichtarbeitsposition verschwenkt.

Gleichzeitig wird der Antrieb für die Mähmesser (18) selbsttätig ausgeschaltet.

### Bezugszeichenliste

- 1: Mähwerk
- 2: Frontmähwerk
- 3: rechtes Seitenmähwerk
- 4: linkes Seitenmähwerk
- 5: Erster Bearbeitungsstreifen
- 6: Zweiter Bearbeitungsstreifen
- 7: Schwaden des Frontmähwerks
- 8: Schwaden des rechten Seitenmähwerks
- 9: Schwaden des linken Seitenmähwerks
- 10: Großschwaden
- 11: Fördereinrichtung des Frontmähwerks
- 12: Fördereinrichtung des rechten Seitenmähwerks
- 13: Fördereinrichtung des linken Seitenmähwerks
- 14: Querförderband des Frontmähwerks
- 15: Querförderband des rechten Seitenmähwerks
- 16: Querförderband des linken Seitenmähwerks
- 17: Fahrspur
- 18: Mähmesserantrieb
- 19: Routinesteuerung
- 20: Vorgewende
- 21: Erntegut
- 22: Schwaden des ersten Bearbeitungsstreifens
- 23: elektromagnetisches Signal
- 24: Antrieb
- 25: Antrieb
- 26: Antrieb
- 27: Achse

- F: Fahrtrichtung

## Patentansprüche

1. Mehrteiliges Mähwerk, das wenigstens ein Frontmähwerk sowie wenigstens ein linkes und wenigstens ein rechtes Seitenmähwerk aufweist, die im Betrieb auf beiden Seiten des wenigstens einen Frontmähwerks angeordnet sind, wobei das wenigstens eine Frontmähwerk, das wenigstens eine linke sowie das wenigstens eine rechte Seitenmähwerk bezüglich einem Trägerfahrzeug verschoben werden können, **dadurch gekennzeichnet, dass** das Frontmähwerk im Betrieb und in Fahrtrichtung des Trägerfahrzeugs gesehen vor dem Trägerfahrzeug angeordnet ist, wobei das wenigstens eine Frontmähwerk für das Vorgewende anhebbar beziehungsweise absenkbar ist.

2. Mähwerk nach Anspruch 1, **dadurch gekennzeichnet, dass** eine anhebbare und absenkbare Frontmähwerksgruppe vorgesehen ist.
